# EUROPEAN PATENT APPLICATION

(11) **EP 4 779 173 A1**
(43) Date of publication of application: **22.07.2026**
(21) Application number: 26151982.1
(22) Date of filing: 15.01.2026
(51) Int. Cl.: F16G 11/14, F16G 11/04, F16G 11/02

(54) **LOCKING DEVICE**

(30) Priority: 21.01.2025 IT 202500000990
(71) Applicant: Uberti S.r.l., 25033 Cologne (BS) (IT)
(72) Inventor: Uberti, Paolo, Cologne (IT)
(74) Representative: Lunati & Mazzoni S.r.L.

(57) **Abstract**

Locking device (1) for cord (10), the cord (10) defining a development line (10a), a radial direction (10b), a first and a second end (11,12) and an intermediate portion (13), the device (1) comprising a first element (2), defining a through-cavity (20) accessible from a first and a second access (20a, 20b) and a main direction (1a), the first element (2) being suitable for housing part of the cord (10) in the cavity (20); a second and a third element (3, 4) respectively adapted to be constrained to the first element (2) at the accesses (20a, 20b) and comprising respectively a first and a second through-holes (30, 31) and a third and a fourth through-holes (40, 41), the accesses (20a, 20b) being accessible respectively only through the holes (30, 31) and the holes (40, 41) when the elements (3, 4) are respectively intended to be constrained to the first element (2); the intermediate portion (13) being housed in the cavity (20) passing respectively through the holes (31, 41); the ends (11, 12) being inserted respectively into the holes (30, 40) and being housed in the cavity (20); the cavity (20) and the accesses (20a, 20b) defining respectively a first and a second housing (21, 22), the housings (21, 22) being suitable for housing the intermediate portion (13), accessible respectively from the accesses (20a, 20b) and extending along the main direction (1a); the housings (21, 22) being aligned respectively with the holes (31, 41); the ends (11, 12) being configured to be inserted respectively into the holes (30, 40) and constrained to a coupling portion (14), each being configured to allow the insertion of the ends (11,12) respectively into the holes (30, 40) and prevent their extraction.

## Description

The present invention relates to a locking device of the type specified in the preamble of the first claim.

The object of the present invention is a locking device which finds application in the field of devices for adjusting cords and, in particular, in the clothing sector.

Devices are now known that allow two ends of a cord to be joined without having to knot them. For example, cord stoppers have been developed that allow a cord that has been closed on itself to be locked, which are used in the clothing industry. In particular, these devices can be used to lock cords connecting a coupling element of an item of clothing displayed in a commercial establishment and the information tag associated with the item of clothing.

In particular, in the luxury clothing sector, it is preferable to use these devices in such a way that the cord knot is not directly exposed. Further, in addition to allowing the cord to be locked, known devices allow for additional aesthetic value due to the aesthetics of the device itself, in terms of the shape, colours and materials used. The cord stoppers themselves may contain an indication of the brand of the clothing item.

The mechanism of these devices allows the length of the two portions of cord to be set both on the garment side and on the tag side. Adjustment and locking can be carried out using special locking elements that can be coupled in a housing to which the cord is coupled. These devices, for example, can exploit elements that can be inserted into the housing, such as foldable elements that can be inserted inside the housing and that close onto the cord itself, limiting its sliding inside the housing. Other types of devices can use pins that can more or less tightly constrain two portions that make up the housing in which the cord slides, locking the cord inside more or less effectively based on the adjustment of the constraint pins.

The known art described above has some significant drawbacks.

In particular, known devices do not allow to fix the position of the cord with respect to the housing. In fact, both the pin system and the interference elements do not allow for effective locking. Therefore, the cord contained in the housing is subject to residual sliding movements inside the housing.

Further, this system can open and therefore be ineffective.

Another drawback of known cord stop devices is their greater structural complexity. In fact, they require a greater number of components to be able to lock the cord.

In this situation, the technical task underlying this invention is to devise a locking device capable of substantially overcoming at least part of the aforementioned drawbacks.

Within the scope of this technical task, an important aim of the invention is to obtain a locking device capable of effectively preventing the slipping of a cord and ensuring its stability.

Another important aim of the invention is to create a locking device with reduced structural complexity.

The specified technical task and purposes are achieved by a locking device as claimed in the appended claim 1.

Preferred technical solutions are highlighted in the dependent claims.

The features and advantages of the invention are clarified below by a detailed description of preferred embodiments of the invention, with reference to the attached drawings, wherein:

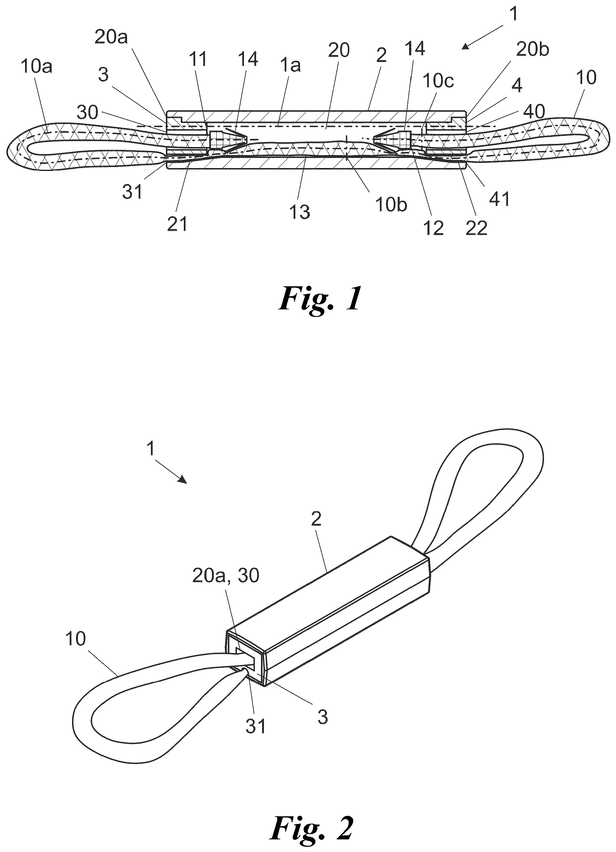

**Fig. 1** shows a first longitudinal section of a locking device according to the invention;
**Fig. 2** shows an axonometric view of a locking device according to the invention;

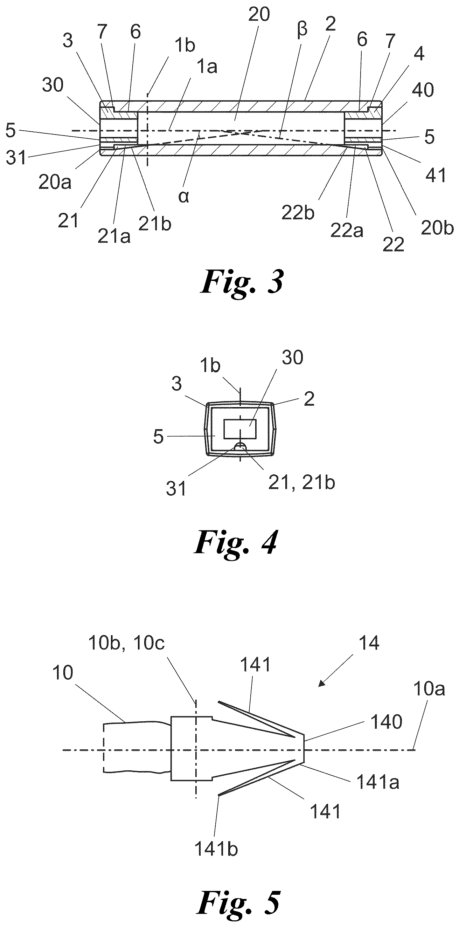

**Fig. 3** shows a second longitudinal section of a part of a locking device according to the invention;
**Fig. 4** is a front view of a first component of a locking device according to the invention in **a** first configuration;
**Fig. 5** is a side view of a second component of a locking device according to the invention;

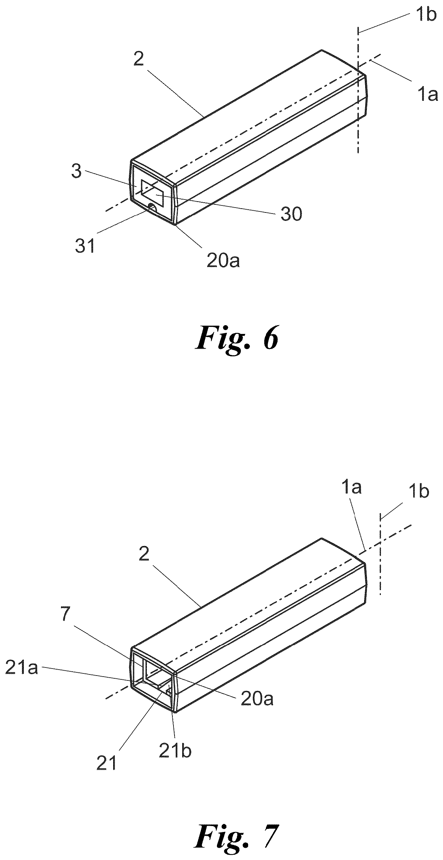

**Fig. 6** shows an axonometric view of a part of a locking device according to the invention in a first configuration;
**Fig. 7** shows an axonometric view of a third component of a locking device according to the invention;

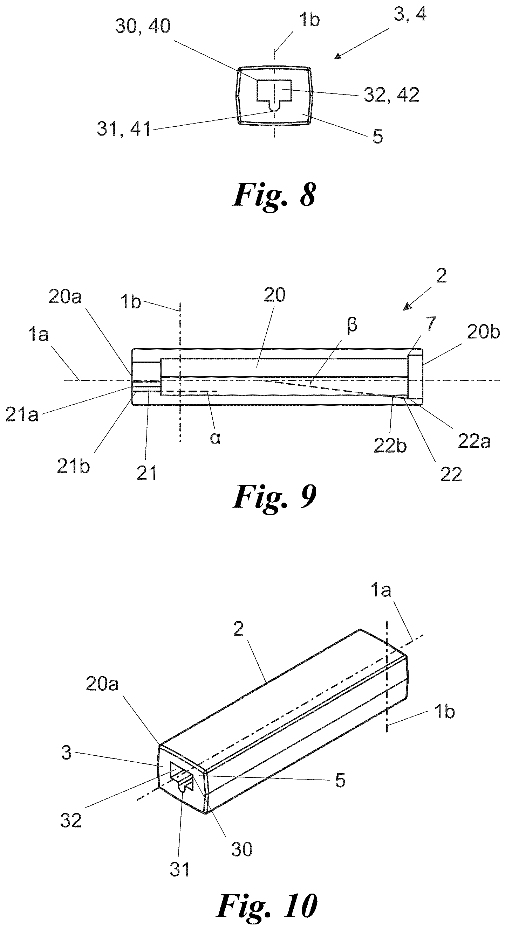

**Fig. 8** is a front view of a first component of a locking device according to the invention in a second configuration;
**Fig. 9** shows a longitudinal view of a third component of a locking device according to the invention; and
**Fig. 10** shows an axonometric view of a part of a locking device according to the invention in a second configuration.

In this document, the measurements, values, shapes, and geometric references (such as perpendicularity and parallelism), when associated with words like "about" or other similar terms such as "approximately" or "substantially", should be understood as allowing for measurement errors or inaccuracies due to production and/or manufacturing errors and, especially, minor deviations from the value, size, shape, or geometric reference with which they are associated. For example, such terms, when associated with a value, preferably indicate a deviation not exceeding 10% of the value itself.

Moreover, terms such as "first", "second", "upper", "lower", "main", and "secondary" when used do not necessarily identify an order, priority of relation, or relative position but may simply be used to more clearly distinguish different components from one another.

Unless otherwise specified, as inferred from the following discussions, terms such as "processing", "computing", "determining", "computation", or similar should be understood as referring to the action and/or processes of a computer or similar electronic computation device that manipulates and/or transforms data represented as physical quantities, such as electronic magnitudes of records of a computing system and/or memories, into other data similarly represented as physical quantities within computer systems, records, or other information storage, transmission, or display devices.

Unless otherwise indicated, the measurements and data reported in this text are to be considered as performed in International Standard Atmosphere ICAO (ISO 2533:1975).

With reference to the Figures, the device according to the invention is generally denoted by reference number **1.** It is a locking device. In particular, it is a locking device for a cord **10.** For example, the cord 10 may be a drawstring used in the clothing sector.

The invention therefore also comprises a cord 10 for items of clothing and an item of clothing comprising at least one cord 10 in turn comprising a coupling device 1 according to the invention.

The cord 10 defines a development line **10a.** It is the main development line of the cord 10. The cord 10 defines a radial direction **10b.** It can be the radial direction with respect to the development line 10a. The cord 10 defines a first end 11. For example, it can correspond to a terminal of the cord 10. The cord 10 can define a second end **12.** It can be the opposite end to the first end 11. The cord 10 comprises an intermediate portion **13.** It is the portion comprised between the ends 11 and 12. The device 1 preferably comprises a first element **2.** It is an element suitable for housing part of the cord 10 in the cavity 20.

The first element 2 defines a cavity **20.** It is a through-cavity. In particular, the cavity 20 is accessible from a first access **20a** and from a second access **20b** opposite to the first access 20a. In particular, the first element 2 preferably defines a main direction **1a.** It may be an insertion direction of the cord 10. In particular, the main direction 1a may extend from the first access 20a to the second access 20b. In detail, the main direction 1a may be the main direction of development of the first element 2. The first access 20a and the second access 20b can be centred and aligned with the main direction 1a.

For example, the first element 2 is preferably tubular. In particular, the first element 2 may have a development axis along the main direction 1a. The cavity 20 may develop primarily along the main direction 1a.

For example, the first element 2 may be parallelepiped shaped. Further, the cavity 20 may be parallelepiped shaped. In particular, the first element 2 and the cavity 20 may develop primarily along the main direction 1a.

For example, the first element 2 may be cylindrical. In particular, the axis of the cylinder can be aligned with the main direction 1a. Therefore, the first access 20a and the second access 20b can be centred on the main direction 1a. The cavity 20 can have a cylindrical shape with the axis aligned with the main direction 1a. These shapes of the first element 2 and of the cavity 20 allow for easier insertion of the cord 10 inside. Further, these shapes allow the aesthetics of the device 1 to be improved.

The device 1 preferably comprises a second element **3.** It is an element intended to be constrained to the first element 2. In particular, the second element 3 is intended to be constrained at the first access 20a. Therefore, the second element 3 may be an element covering the first access 20a. It may be a plug insertable at least partially into the first access 20a along the main direction 1a. For example, the second element 3 may preferably be counter-shaped to the first access 20a. In particular, the face of the second element 3 covering the first access 20a may be rectangular. Alternatively, it may be circular. In this regard, the second element 3 may comprise a head **5.** Further, it may comprise an insertion portion **6.** The insertion portion 6 can be inserted into the first access 20a. In particular, the insertion portion 6 can be inserted along the main direction 1a. The first access 20a can comprise obstructing elements **7.** They can enable the insertion of the insertion portion 6 and obstruct the head 5. In fact, the latter may have larger transverse directions than the insertion portion 6. In this way, the second element 3 can be inserted into the cavity 20 until reaching a position in which the head 5 obstructs any further insertion into the cavity 20 due to the effect of the interaction with the obstructing elements 7. Therefore, the second element 3 can be constrained to the first element 2 by interlocking.

The second element 3 preferably comprises a first through-hole **30.** Further, the second element 3 preferably comprises a second through-hole **31.** Therefore, the first access 20a is only accessible through the first hole 30 and the second hole 31 when the second element 3 is constrained to the first element 2. The first hole 30 and the second hole 31 perform the function of positioning the cord 10 inside the cavity 20.

The device 1 preferably comprises a third element **4.** Like the second element 3, it is an element intended to be constrained to the first element 2. **In** particular, the third element 4 is intended to be constrained at the second access 20b. Therefore, the third element 4 may be an element covering the second access 20b. Like what has been described above, it may be a plug. In particular, it may be a plug insertable at least partially into the second access 20b. For example, the third element 4 may preferably be counter-shaped to the second access 20b. In particular, the face of the third element 4 covering the second access 20b may be rectangular. Alternatively, it may be circular. Like what has been described in relation to the second element 3, the third element 4 can comprise a head 5 and an insertion portion 6. The insertion portion 6 can be inserted into the second access 20b. In particular, the insertion portion 6 can be inserted along the main direction 1a. The second access 20b can comprise obstructing elements 7. They can enable the insertion of the insertion portion 6 and obstruct the head 5. In fact, the latter may have larger transverse directions than the insertion portion 6. In this way, the third element 4 can be inserted into the cavity 20 until reaching a position in which the head 5 obstructs any further insertion into the cavity 20 due to the effect of the interaction with the obstructing elements 7. Therefore, the third element 4 can be constrained to the first element 2 by interlocking.

In detail, the third element 4 preferably comprises a third through-hole **40.** Further, the third element 4 preferably comprises a fourth through-hole **41.** Therefore, the second access 20b is only accessible through the third hole 40 and the fourth hole 41 when the third element 4 is constrained to the first element 2. The third hole 40 and the fourth hole 41 perform the function of positioning the cord 10 inside the cavity 20.

The first hole 30 and the third hole 40 can be centred on the main direction 1a. Likewise, the second hole 31 and the fourth hole 41 can be centred on the main direction 1a. Therefore, the first hole 30 and the third hole 40 may be aligned along the main direction 1a. Likewise, the second hole 31 and the fourth hole 41 can be aligned along the main direction 1a.

The first hole 30 may preferably be joined to the second hole 31. In particular, they can form a single fifth through-hole **32.** In particular, the second hole 31 may be obtainable from a notch in an edge of the first hole 30. For example, the second hole 31 may be a notch in the edge of the first hole 30. The fifth hole 32 has the advantage of making the structure of the first element 3 simpler.

The third hole 40 may preferably be joined to the fourth hole 41. In particular, they can form a single sixth through-hole **42.** In particular, the fourth hole 41 may be obtainable from a notch in an edge of the third hole 40. For example, the fourth hole 41 may be a notch in the edge of the third hole 40. Like what has been described in relation to the fifth hole 32, the sixth hole 42 has the advantage of making the structure of the second element 4 simpler.

At least part of the intermediate portion 13 can be housed in the cavity 20. In particular, the intermediate portion 13 can be housed in the cavity 20 passing through said second hole 31 and the fourth hole 41, respectively.

Therefore, the cord 10 can be inserted into the cavity 20 through the first access 20a and brought out of the cavity 20 by the second access 20b or vice versa, so that the intermediate portion 13 is housed inside the cavity 20. Therefore, the second hole 31 and the fourth hole 41 advantageously perform the function of through-holes for allowing the intermediate portion 13 to be housed inside the cavity 20.

The cavity 20 and the first access 20a preferably define a first internal housing **21.** It may be a housing obtained in an inner wall of the cavity 20. For example, it may be a recess in the wall. In particular, the first housing 21 preferably extends primarily along the main direction 1a.

Likewise, the cavity 20 and the second access 20b preferably define a second internal housing **22.** Like the first housing 21, the second housing 22 may be a housing obtained in an inner wall of the cavity 20. The second housing 22 may be a recess in an inner wall of the cavity 20. In particular, the second housing 22 preferably extends primarily along the main direction 1a.

Therefore, the first housing 21 and the second housing 22 may be substantially aligned along the main direction 1a.

The first housing 21 and the second housing 22 are suitable for housing the intermediate portion 13. In particular, the first housing 21 is accessible from the first access 20a. In particular, the second housing 22 is accessible from the second access 20b. Therefore, the intermediate portion 13 can be inserted into the first access 20a, partially housed in the first housing 21, partially housed in the second housing 22 and exit from the second access 20b.

Preferably, the first housing 21 defines first obstruction walls **21a.** Likewise, the second housing 22 defines second obstruction walls **22a.**

In particular, the first obstruction walls 21a and the second obstruction walls 22a may be walls extending at least along a direction perpendicular **1b** to the main direction 1a. In particular, the first obstruction walls 21a can advantageously perform the function of containing the intermediate portion 13 when it is inserted into the first housing 21.

Likewise, the second obstruction walls 22a can advantageously perform the function of containing the intermediate portion 13 when it is inserted into the second housing 22.

In particular, both the first obstruction walls 21a and the second obstruction walls 22a can compress the intermediate portion 13 in the radial direction 10b and at least partially obstruct the sliding of the intermediate portion 13 with respect to the first element 2.

In particular, at least one of the first obstruction walls 21a and the second obstruction walls 22a may preferably extend along the main direction 1a.

For example, the first housing 21 (likewise the second housing 22) can be shaped like a channel developing primarily along the main direction 1a and can be delimited by the first obstruction walls 21a (second obstruction walls 22a for the second housing 22). The intermediate portion 13 can then be housed therein so that the development line 10a is aligned with the main extension direction of the first housing 21 (second housing 22).

If the cord 10 has dimensions in the radial direction 10b such that they are greater than the transverse dimensions of the first housing 21 and the second housing 22, the intermediate portion 13 can undergo compression in the radial direction 10b in its portions inserted into the housings 21 and 22.

The first housing 21 preferably defines a first bottom surface **21b.** It may be a surface extending along a plane transverse to the first obstruction walls 21a. Likewise, the second housing 22 preferably defines a second bottom surface **22b.** The latter may be extended along a plane transverse to the second obstruction walls 22a.

The first bottom surface 21b and the second bottom surface 22b are surfaces on which the intermediate portion can be placed. These too can perform a compression function in the radial direction 10b which limits the sliding of the cord 10 inside the housings 21 and 22.

In particular, the first bottom surface 21b preferably forms a first angle **α.** It is an angle formed by the first bottom surface 21b with respect to the main axis 1a. In particular, the first angle α is measured from the main direction 1a, with opening towards the first bottom surface 21b and facing the first access 20a. In detail, the first angle α preferably has a value less than 90°. For example, the first angle α may have a value equal to 0°. In this configuration, therefore, the first housing 21 may be a channel substantially aligned with the main direction 1a and wherein the first bottom wall 21b is parallel to the main direction 1a. Alternatively, if the first angle α has a value greater than 0° and less than 90°, the first bottom surface 21b can then be inclined with respect to the main direction 1a. The first bottom surface 21b can thus be a ramp on which the intermediate portion 13 is placed and delimited laterally by a pair of first obstruction walls 21a opposite and parallel to each other.

Likewise, the second bottom surface 22b preferably forms a second angle β. It is an angle formed by the second bottom surface 22b with respect to the main axis 1a. In particular, the second angle β is measured from the main direction 1a, with opening towards the second bottom surface 22b and facing the second access 20b. In detail, the second angle β preferably has a value less than 90°. For example, the second angle β may have a value equal to 0°. In this configuration, therefore, the second housing 22 may be a channel substantially aligned with the main direction 1a and wherein the second bottom wall 22b is parallel to the main direction 1a. Alternatively, if the second angle β has a value greater than 0° and less than 90°, the second bottom surface 22b can then be inclined with respect to the main direction 1a. The second bottom surface 22b can thus be a ramp on which the intermediate portion 13 is placed and delimited laterally by a pair of second obstruction walls 22a opposite and parallel to each other.

Therefore, according to the values of the first angle α and the second angle β, different possible configurations of the device 1 are possible. For example, the first bottom surface 21b may be parallel to the main direction 1a and the second bottom surface 22b may be inclined with respect to the main direction 1a. Alternatively, the first bottom surface 21b may be inclined with respect to the main direction 1a and the second bottom surface 22b may be parallel to the main direction 1a. Alternatively, both the first bottom surface 21b and the second bottom surface 22b may be parallel to the main direction 1a. Alternatively, both the first bottom surface 21b and the second bottom surface 22b may be inclined with respect to the main direction 1a. In this latter configuration, the two bottom surfaces may be inclined in the opposite direction.

In general, the first housing 21 is preferably aligned with the second hole 31.

For example, the first housing may be accessible along the direction of greatest extension from the first access 20a.

Likewise, the second housing 22 is preferably aligned with the fourth hole 41. For example, the second housing 22 may be accessible from the second access 20b. The housings 21 and 22 may be placed in proximity to the respective accesses 20a and 20b.

At least one of the second element 3 and the third element 4 can preferably be constrained irreversibly to the first element 2.

For example, the second element 3 and the third element 4 can be inserted into respective housings 20a and 20b and constrained irreversibly. For example, the edges of the second element 3 and the third element 4 may be smaller than the edges of the corresponding accesses 20a and 20b so as to allow insertion and that due to friction between the facing walls of the second element 3 with the first access 20a (or of the third element 4 with the second access 20b) once inserted, the second element 3 is no longer extractable from the first access 20a (or the third element 4 is not extractable from the second access 20b).

Therefore, the intermediate portion 13 can be housed partly in the second hole 31, partly in the first housing 21, partly inside the cavity 20, partly in the second housing 22 and partly in the fourth hole 41. Advantageously, the intermediate portion 13 inserted into the second hole 31 and the fourth hole 41 ensures that the cord is effectively locked inside the housings 21 and 22 by the effect of the obstruction walls 21a, 22a and the bottom surfaces 21b, 22b, as well as the holes 31 and 41. The latter, in fact, can have dimensions smaller than the dimensions in the radial direction 10b of the cord 10. Consequently, the second hole 31 and the fourth 41 also perform the function of compressing the cord 10 in the radial direction 10b and preventing it from sliding inside the cavity 20.

Therefore, the device 1 causes the cord 10 to be effectively locked in its intermediate portion 13 inside the first element 1.

The first end 11 and the second end 12 are preferably configured to be inserted into the first hole 30 and the third hole 40, respectively.

In detail, the first end 11 is preferably inserted into the first hole 30 and housed in the cavity 20.

Likewise, the second end 12 is preferably inserted into the third hole 40 and housed in the cavity 20.

In this way, the cord 10 forms a loop at each access 20a and 20b. In fact, from the first end 12 inside the first hole 30 to the intermediate portion 13 in its part inserted into the second hole 31, the cord 10 forms a first loop. Likewise, from the second end 13 inserted into the third hole 40 to the intermediate portion 13 in its part inserted into the fourth hole 41, the cord 10 forms a second loop.

The first end 11 and the second end 12 are respectively constrained to a coupling portion **14.** Each coupling portion 14 is configured to allow the insertion of the first end 11 into the first hole 30 (likewise the second end 12 into the third hole 40). For example, the coupling portion 14 may be an element made of rigid material which facilitates the insertion of the first end 11 into the first hole 30. In this way, the first coupling portion 14 prevents the first end 11 from bending during insertion into the first hole 30. Further, the insertion of the first end 11 into the first hole 30 is thus made easier.

The first coupling portion 14 is configured to prevent the extraction of the first end 11 from the first hole 30. In fact, it can advantageously make the insertion of the first end 11 into the first hole 30 irreversible.

Likewise, the coupling portion 14 is configured to allow the insertion of the second end 12 into the third hole 40. For example, like what has been described in relation to the first end 11, the coupling portion 14 constrained to the second end 12 can be an element made of rigid material that facilitates the insertion of the second end 12 into the third hole 40. In this way, the coupling portion 14 prevents the second end 12 from bending during insertion into the third hole 40. Further, the insertion of the second end 12 into the third hole 40 is thus made easier.

The second coupling portion 12a is configured to prevent the extraction of the second coupling portion 12a from the second hole 40. In fact, it can advantageously make the insertion of the second end 12 into the second hole 40 irreversible.

Therefore, the two loops formed at the first access 20a and the second access 20b respectively are fixed. The portions of the cord 10 that make up the two loops cannot be varied in size and length by pulling the cord 10 In fact, it is advantageously locked both by the coupling portions 14 respectively constrained to the first end 11 and to the second end 12, at the first hole 30 and the third hole 40 respectively, and by the compression of the cord 10 at the sections of the intermediate portion 13 inserted respectively into the second hole 31 (and therefore in the first housing 21) and into the fourth hole 41 (and therefore in the second housing 22).

For example, the device 1 can function as a security seal. In detail, a tag can be tied to one loop and a portion of an item of clothing (for example, the pull tab of a zipper) can be tied to the other loop. The device 1 can thus act as a constraint between an item of clothing and the display tag and as a seal that cannot be removed unless the cord 10 breaks.

Preferably, each coupling portion 14 comprises at least one tip **140** respectively. For example, it may be the most extreme portion constrained to the first end 11 or to the second end 12. Therefore, when the first end 11 (or the second end 12) is inserted into the first hole 30 or the third hole 40, the tip 140 is the part of the coupling portion 14 that first enters the hole (30 or 40). Further, each coupling portion 14 preferably comprises a flexible element **141.** In particular, the latter is flexible in the radial direction 10b. Further, the flexible element 141 may extend primarily along the development line 10a from the first end 11 (or from the second end 12) towards the intermediate portion 13.

The flexible element 141 may define a proximal portion **141a.** The latter is a portion constrained to the tip 140. Further, the flexible element 141 preferably defines a distal portion **141b.** It is an opposite portion to the proximal portion 141a. In particular, the distal portion 141b may be at a distance, along the radial direction 10b, greater than the dimensions of the first hole 30 (or the second hole 40) when the flexible element 141 is not compressed along the radial direction 10b.

The flexible element 141 may be an element extending along a circumferential direction **10c** with respect to the development line 10a. For example, it may have the shape of a truncated cone shell, constrained in its smaller diameter portion to the tip 140. In this regard, the distal portion 141b can develop along the circumferential direction 10c. Alternatively, the coupling portion 14 may comprise at least two flexible elements 141 opposite with respect to the radial direction 10b. For example, they may be two flexible elements 141 extending primarily along a line.

For example, the coupling portion 14 may be arrow shaped. For example, the coupling portion 14 may comprise two flexible elements 141 opposite and symmetrical with respect to a plane passing through the development line 10a. The distal portion 141b can preferably be moved towards the cord 10 along the radial direction 10b when the flexible element 141 is compressed in the radial direction 10b. Therefore, the flexible element 141 can be compressed along the radial direction 10b when the first end 11 (second end 12) is inserted into the first hole 30 (third hole 40). Therefore, when compressed radially, the flexible element 141 can allow the end to pass through the hole.

The distal portion 141b preferably interferes with the second element 3 (or with the third element 4 when the first end 11 or the second end 12, respectively, is pulled outwards of the first hole 30 or the second hole 40, respectively. For example, once the first end 11 (second end 12) has been inserted into the first hole 30 (third hole 40) and once the transverse dimensions are again greater than the dimensions of the first hole 30 (third hole 40), the flexible elements 141 may interfere with the walls of the first hole 30 (third hole 40) itself. In this way, the coupling portions 14 advantageously make the insertion of the ends 11 and 12 into the respective holes 30 and 40 irreversible.

For example, two distal portions 141b of respective opposite flexible elements 141 may interact with the walls surrounding the first hole 30 or the third hole 40 so as to obstruct the exit of the end from the corresponding hole.

In this way, the device 1 makes sure that the cord 10 is locked and cannot slide with respect to the first element 2. Further, the first end 11 and the second end 12 are also locked inside the first element 2.

In the device 1 at least one of the first element 2, the second element 3 and the third element 4 is preferably made of metal or plastic. These allow for resistance and hardness properties that make the interlocking between the components and the locking of the ends 11 and 12 more efficient.

The operation of the device 1 previously described in structural terms is as follows. The device 1 can be assembled in the following way: the second end 12 is inserted into the first access 20a, is passed through the cavity 20 and is made to exit from the second access 20b. Subsequently, the intermediate portion 13 can be passed through the second hole 31, can be partly housed in the first housing 21, partly in the second housing 22, and passed through the fourth hole 41. After adjusting the length of the two portions of the cord 10 outside the first element 2, the second element 3 and the third element 4 can be constrained to the first element 2. For example, they can be interlocked in the first housing 20a and the second housing 20b, respectively.

The cord 10 is passed through at least one opening in a first object such as, for example, an information tag for an item of clothing. For example, the first end 11 can be inserted in order to open the first object. Likewise, the second end 12 can be constrained to a second object such as, for example, an item of clothing. For example, the second object can be a pull tab of a zipper.

Once the second element 3 and the third element 4 have been fixed to the first element 2, and the first and second objects have been constrained to the cord 10 in the two opposite portions, the first end 11 can be inserted into the first hole 30. Further, the second end 12 can be inserted into the third hole 40. The coupling portion 14 constrained to the first end 11 can be subjected to compression during insertion into the first hole 30. Once the first end 11 has been inserted into the first hole 30, each flexible element 141 can be partially moved away from the cord 10. In particular, the distal portion 141b may move away from the cord 10. Once the distal portions 141b are at radial distances greater than the dimensions of the holes, they prevent the extraction of the ends from the holes by interaction with the walls surrounding the first hole 30 (third hole 40).

Once the ends 11 and 12 have been locked inside the first body 2, the two loops are formed at the respective accesses 20a and 20b. For example, after assembling the device 1, the tag is constrained to one loop and the item of clothing is constrained to the opposite loop. Depending on the type of coupling of the first and second objects, the first and second objects may also be directly constrained to the two loops formed.

The device 1 according to the invention achieves important advantages.

In fact, the device 1 allows the cord 10 to be prevented from sliding inside the cavity 20. In this way, situations can be avoided in which the cord 10 can slip out of its respective housing. As a result, the device 1 allows to effectively lock the ends of the cord inside the internal cavity.

Consequently, another advantage of the device 1 is that the locking of the cord causes the device 1 to act as a security seal. Therefore, any tampering would lead to the breaking of the cord 10.

Another advantage of the device 1 comes from the reduced structural complexity. **In** fact, the device 1 can be composed of only three components. Furthermore, the components of the device 1 allow for greater ease of assembly.

The invention is subject to variations within the scope of the inventive concept defined by the claims.

Within this scope, all details can be replaced by equivalent elements, and materials, shapes, and dimensions may be any.

## Claims

1. Locking device (1) for a cord (10) for an item of clothing, said cord (10) defining a development line (10a), a radial direction (10b) with respect to said development line (10a), a first end (11), a second end (12) and an intermediate portion (13) comprised between said ends (11, 12), said device (1) comprising a first element (2), defining a through-cavity (20) accessible from a first access (20a) and a second access (20b) opposite to said first access (20a) and a main direction (1a) of insertion extending from said first access (20a) to said second access (20b), said first element (2) being suitable for housing part of said cord (10) in said cavity (20); and **characterised in that** it further comprises:
- a second element (3) intended to be constrained to said first element (2) at said first access (20a) and comprising a first through-hole (30) and a second through-hole (31), said first access (20a) being accessible only through said first hole (30) and said second hole (31) when said second element (3) is constrained to said first element (2);
- a third element (4) intended to be constrained to said first element (2) at said second access (20b) and comprising a third through-hole (40) and a fourth through-hole (41), said second access (20b) being accessible only through said third hole (40) and said fourth hole (41) when said third element (4) is constrained to said second element (2);
- part of said intermediate portion (13) being housed in said cavity (20) passing through said second hole (31) and said fourth hole (41), respectively;
- said first end (11) and said second end (12) being inserted into said first hole (30) and said third hole (40) respectively and being housed in said cavity (20);
- said cavity (20) and said first access (20a) defining a first internal housing (21), said cavity (20) and said second access (20b) defining a second internal housing (22), said first housing (21) and said second housing (22) being suitable for housing said intermediate portion (13), said first housing (21) being accessible from said first access (20a), said second housing (22) being accessible from said second access (20b), said first housing (21) and said second housing (22) extending primarily along said main direction (1a);
- said first housing (21) being aligned with said second hole (31);
- said second housing (22) being aligned with said fourth hole (41);
- said first end (11) and said second end (12) being configured to be inserted into said first hole (30) and said third hole (40), respectively;
- said first end (11) and said second end (12) being respectively constrained to a coupling portion (14), each coupling portion (14) being configured respectively to allow the insertion of said first end (11) into said first hole (30) and prevent its extraction from said first hole (30) and to allow the insertion of said second end (12) into said second hole (40) and prevent its extraction from said second hole (40).

2. Device (1) according to claim 1, wherein said first access (20a) and said second access (20b) are centred and aligned to said main direction (1a), said first housing (21) and said second housing (22) defining first obstruction walls (21a) and second obstruction walls (22a) respectively extending at least along a direction perpendicular (1b) to said main direction (1a).

3. Device (1) according to the preceding claim, wherein at least one of said first obstruction walls (21a) and said second obstruction walls (22a) extend along said main direction (1a).

4. Device (1) according to any one of claims 2-3, wherein said first housing (21) defines a first bottom surface (21b) extending along a plane transverse to said first obstruction walls (21a) and said second housing (22) defines a second bottom surface (22b) extending along a plane transverse to said second obstruction walls (22a).

5. Device (1) according to the preceding claim, wherein said first bottom surface (21b) forms a first angle (α), with respect to said main axis (1a), having value less than 90° and said second bottom surface (22b) forms a second angle (β) with respect to said main axis (1a) having value less than 90°.

6. Device (1) according to any one of the preceding claims, wherein said first hole (30) is joined to said second hole (31) and they form a single fifth through-hole (32), said second hole (31) being obtainable from a notch in an edge of said first hole (30).

7. Device (1) according to any one of the preceding claims, wherein said third hole (40) is joined to said fourth hole (41) and they form a single sixth through-hole (42), said fourth hole (41) being obtainable from a notch in an edge of said third hole (40).

8. Device (1) according to any one of the preceding claims, wherein at least one of said second element (3) and said third element (4) is counter-shaped to said first access (20a) and said second access (20b), respectively.

9. Device (1) according to any one of the preceding claims, wherein at least one of said second element (3) and said third element (4) is irreversibly constrainable to said first element (2).

10. Device (1) according to any one of the preceding claims, wherein at least one of said first element (2), said second element (3) and said third element (4) is made of metal or plastic.

11. Device (1) according to any one of the preceding claims, wherein each said coupling portion (14) respectively comprises at least one tip (140), a flexible element (141) in said radial direction (10b) and extending primarily along said development line (10a) from said first end (11) or said second end (12) toward said intermediate portion (13), said flexible element (141) defining a proximal portion (141a) constrained to said tip (140), and a distal portion (141b) opposite said proximal portion (141a), said distal portion (14b) being at a distance, along said radial direction (10b) greater than the size of said first hole (30) or of said second hole (40) when said flexible element (141) is not compressed along said radial direction (10b), said distal portion (141b) being approachable to said cord (10) along said radial direction (10b) when said flexible element (141) is compressed in said radial direction (10b), said distal portion (141b) interfering with said second element (3) or said third element (4) when respectively said first end (11) or said second end (12) is pulled outward of said first hole (30) or said second hole (40) respectively.

12. Cord (10) for an item of clothing comprising a locking device (1) according to any one of the preceding claims.

13. Item of clothing comprising at least one cord (10) according to the preceding claim.
